Europäisches Patentamt

European Patent Office

Office européen des brevets

(19)

(11) Publication number: **0 088 804**
**B1**

# (12) EUROPEAN PATENT SPECIFICATION

(45) Date of publication of patent specification: **15.11.89**

(51) Int. Cl.⁴: **G 05 B 19/405**

(21) Application number: **82902826.5**

(22) Date of filing: **22.09.82**

(86) International application number:
**PCT/JP82/00379**

(87) International publication number:
**WO 83/01129 31.03.83 Gazette 83/08**

## (54) NUMERICAL CONTROL DEVICE.

(30) Priority: **22.09.81 JP 149819/81**

(43) Date of publication of application:
**21.09.83 Bulletin 83/38**

(45) Publication of the grant of the patent:
**15.11.89 Bulletin 89/46**

(84) Designated Contracting States:
**DE FR GB**

(56) References cited:
**DE-A-2 839 736**
**FR-A-2 375 646**
**GB-A-1 359 073**

(73) Proprietor: **FANUC LTD**
**3580, Shibokusa Aza-Komanba Oshino-mura**
**Minamitsuru-gun Yamanashi 401-05 (JP)**

(72) Inventor: **ISOBE, Shinichi**
**Hinodai-Haitsu 516 1-1-1, Hinodai**
**Hino-shi Tokyo 191 (JP)**
Inventor: **SAWADA, Kazuo**
**Ikeda-Sou. 5-17-11 Tamadaira**
**Hino-shi Tokyo 191 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

EP 0 088 804 B1

# Description

This invention relates to a numerical control apparatus and, more particularly but not necessarily exclusively, to a numerical control apparatus well-suited for application to a numerical control system in which a numerical control apparatus and a machine tool are united into a mechanical-electronics arrangement.

A computerized numerical control apparatus has a numerical control unit constituted by a microprocessor or the like and is connected to various input/output units by a data bus.

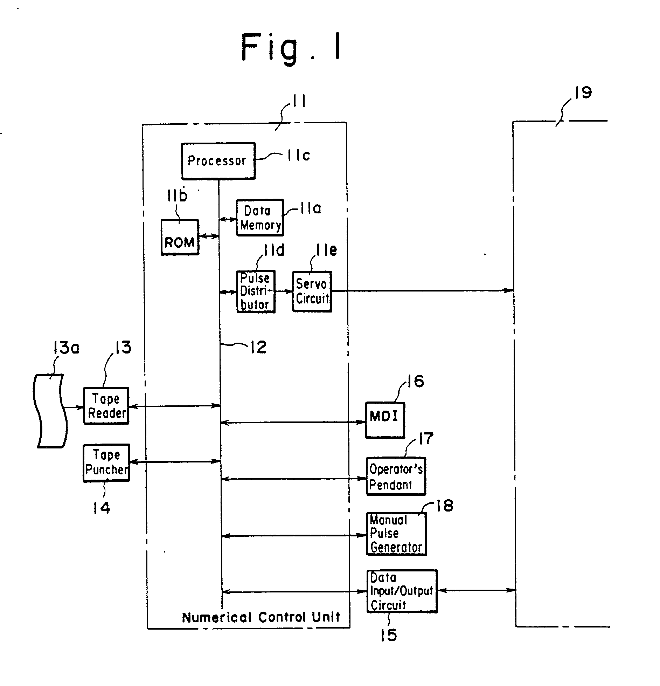

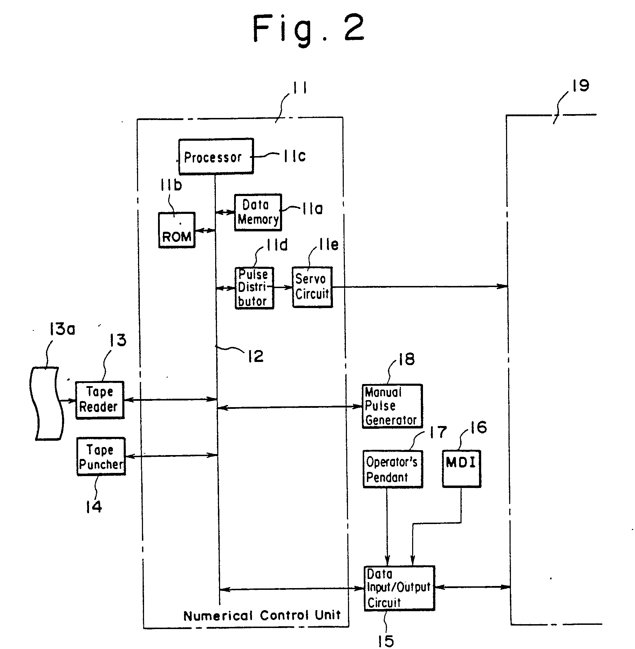

Fig. 1 is a block diagram of a such a numerical control apparatus. In the drawing, numeral 11 denotes a numerical control unit having a readable and writable data memory (RAM) 11a for storing machining program data and the results of processing, a read-only memory (ROM) 11b for storing a control program which controls all numerical control processing, a processor 11c for executing various kinds of processing such as processing for the sensing and receiving of signals, a pulse distributor 11d which receives a position command as an input and produces distributed pulses by performing known pulse distribution computations, and a servo circuit 11e for controlling the rotation of a motor. Numeral 12 designates a bus line having an address bus for transferring address signals and a data bus for transferring data. Numeral 13 denotes a paper tape reader for reading machining program data punched in a paper tape, and for storing the machining program data in the data memory 11a. Numeral 14 denotes a paper tape puncher for recording the machining program data by punching the data, stored in the data memory 11a, into a paper tape serving as an external storage medium. It should be noted that a magnetic cassette tape device and magnetic bubble cassette device may be connected to the unit in place of the tape reader 13 and tape puncher 14. Numeral 15 designates a power magnetics circuit (data input/output circuit) for the sending and receiving of data between a machine tool and the numerical control unit. Specifically, the power magnetics circuit 15 delivers signals indicative of M-, S- and T-function instructions and the like from the numerical control unit 11 to the machine side, and applies, to the numerical control unit, various limit switch signals, relay contact signals and operation completion signals concerning the M-, S- and T-function instructions, which signals are received from the machine side. Numeral 16 represents a manual data input unit (MDI unit) equipped with a CRT. The MDI unit 16 is capable of entering single blocks of machining data by a manual operation, and also has functions for correcting a machining program, for effecting partial deletion of and addition to the machining program, and other functions as well. Numeral 17 designates an operator's pendant provided with various switches and buttons such as a cycle start button, a mode selection switch, a jog feed button and a zero-point return button. Numeral 18 is a manual pulse generator for generating pulses in response to a manual operation, and 19 is a machine tool. As shown in Fig. 2, an arrangement is also possible wherein the MDI unit 16 and operator's pendant 17 are connected to the bus line 12 through the power magnetics circuit (data input/output circuit) 15.

The numerical control unit 11 controls the machine tool by executing numerical control processing under the control of the control program on the basis of the machining program data stored in the data memory 11a. At the same time that it is performing numerical control processing, the numerical control unit 11 monitors the status of the machine tool (such as the on/off state of various limit switches) which arrives via the power magnetics circuit, monitors the state of the switches and buttons on the operator's pendant, and performs processing in accordance with the status of the machine tool and the states established by the operator's pendant. The reading of, e.g. data and operating states from the various devices 13 through 18 connected to the bus line 12, or the outputting of data to each of these devices, is performed by an interrupt or by sending address signals out on an address bus to successively designate these devices and placing the data on the data bus.

Recently, systems have come to be employed having a so-called mechanical-electronics construction wherein a numerical control apparatus and machine are unified. In such a mechanical-electronics system, the numerical control unit 11 is disposed at the back of the machine tool 19 while the data input/output units such as the tape reader 13 and tape puncher 14, as well as the operator-manipulated devices such as the MDI unit 16, operator's pendant 17 and manual pulse generator 18, are disposed at an easily accessible location remote from the numerical control unit 11. Accordingly, if the arrangement of Fig. 1 or Fig. 2 is employed without making any change in the numerical control apparatus of the mechanical-electronics system, the various devices must be connected to the numerical control unit 11 by connecting cables of considerable length. This complicates the arrangement of the system, invites higher cost and results in misconnections.

GB—A—1 569 065 (corresponding to DE—A—2 839 736) shows in Fig. 1 a machine tool controlled by a separate numerical control system. A programmer unit for generating numerical control machining part programs for the numerical control system may be coupled to a DNC interface of the numerical control system through a cable for direct transfer of a program to the numerical control system. However this programmer unit is not suitable for real time remote control by an operator.

An object of the present invention is to provide a numerical control apparatus wherein connecting cables can be reduced even in a mechanical-electronics system, and wherein it is possible to achieve real time remote control with excellent operability and to lighten the processing burden of the numerical control unit.

According to the present invention there is provided numerical control apparatus, comprising a numerical control unit controlling a machine tool, a data input unit, for example a paper tape reader, for entering numerical control machining program data, and operator-manipulated devices, including an operator's pendant, for operator control of the apparatus,

the apparatus further comprising a local control circuit, remote from the numerical control unit, through which numerical control machining program data is passed from the data input unit to the numerical control unit, and through which data is passed between the operator-manipulated devices and the numerical control unit, all the data input/output units being connected to the numerical control unit via the local control circuit,

the numerical control unit comprising a processor, a data memory for storing numerical control machining program data and the results of processing, and a direct memory access controller operable in response to a data transfer command from the processor to start a direct memory access operation for data transfer between the thereby directly accessible data memory and the local control circuit via a data transfer line, through which the local control circuit is connected to the numerical control unit, as a bit serial, and the local control circuit comprising data selectors for use in reading data from and transmitting data to the data input unit and the operator-manipulated devices, the data selectors being adapted to store the data in parallel form and transfer it to or from a selected one of the data input unit and the operator-manipulated devices in dependence upon an address fed to the data selectors, and a data conversion means for performing a serial-parallel data conversion upon data transferred to the data selectors via the data transfer line.

With an embodiment of numerical control apparatus according to the invention, connecting cables can be markedly reduced in a mechanical-electronics system even when the numerical control unit is remote from each of the operator-manipulated devices. This simplifies the system arrangement and prevents the occurrence of misconnections. Further, since each of the operator-manipulated devices is controlled by the local control circuit, the numerical control unit need exchange data only with a power magnetics circuit or with the power magnetics circuit and the local control circuit, thereby lightening the processing burden of the numerical control unit. Since the operator-manipulated devices may be collected together at a single location, the operator can perform his tasks with greater efficiency and remote control can be performed with facility.

Brief description of the drawings

Figs. 1 and 2 are views showing the arrangement of a conventional numerical control apparatus;

Fig. 3 is a view showing the arrangement of a numerical control apparatus according to the present invention; and

Fig. 4 is a block diagram showing details of the arrangement of Fig. 3.

An embodiment of the present invention will now be described with reference to the drawings.

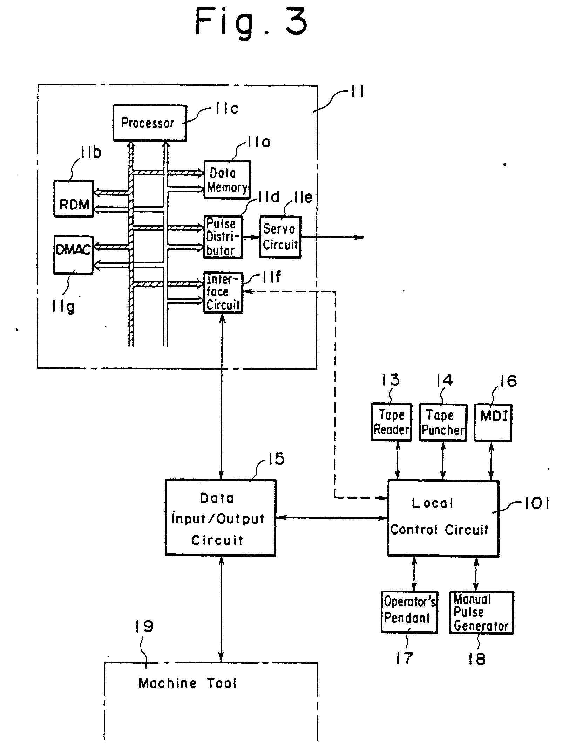

Fig. 3 is a block diagram illustrating one embodiment of the present invention. Portions similar to those shown in Fig. 1 are designated by like reference characters.

In the drawing, numeral 101 denotes a local control circuit connected to the tape reader 13, the tape puncher 14, the MDI unit 16 having the CRT, the operator's pendant 17 and the manual pulse distributor 18. The control circuit 101 is connected to the numerical control unit 11 through the power magnetics circuit 15, or to an interface circuit 11f of the numerical control unit 11 directly without the intermediary of the power magnetics circuit 11, as indicated by the dashed line. Numeral 11g denotes a direct memory access controller (referred to as a DMAC).

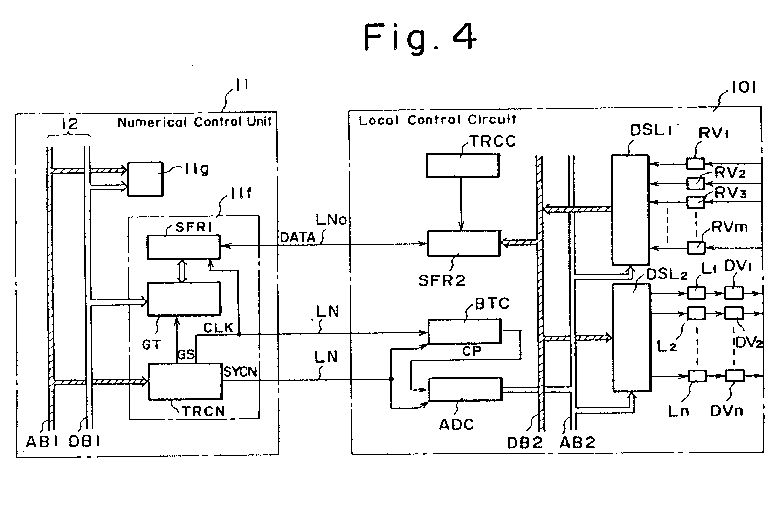

Fig. 4 is a block diagram showing details of Fig. 3. This illustrates the case where the numerical control unit 11 and local control circuit 101 are interconnected directly without the intermediary of the power magnetics circuit.

In the interface circuit 11f, SFR1 represents a shift register capable of both parallel and serial writing and reading. GT denotes a gate circuit for controlling the writing of data into the shift register SFR1 and the reading of data out of the register. TRCN represents a transmission control circuit for generating clock pulses CLK and a synchronizing signal SYNC when a serial data transfer takes place. The transmission control circuit TRCN receives an address signal from the address bus AB1 and responds by generating a gate signal GS for controlling the status of the gate circuit GT. In the local control circuit 101, TRCC represents a transmission control circuit, and SFR2 a shift register capable of both parallel and serial writing and reading of data, similar to the shift register SFR1. BTC denotes a bit counter having a capacity equivalent to the number of bits (eight) in one item of parallel data. The bit counter BTC counts the clock pulses CLK received from the numerical control unit 11 and generates a single carry pulse CP when eight clock pulses CLK have arrived, namely in response to transmission of eight bits of data. ADC represents an address counter for generating an address signal. The address counter ADC counts the carry pulses CP and transmits the counted value as an address signal on an address bus AB2. RV1 through RVm denote receivers and DV1 through DVn represent drivers, these being connected to the tape reader 13, tape puncher 14, MDI unit 16, operator's pendant 17 and manual pulse generator 18. L1 through Ln designate latch circuits, and DSL1, DSL2 represent data selectors for reading data and for transmitting data, respsectively. The data selector DSL1 reads data from eight of the receivers in accordance with an address received from the address counter ADC via the address bus AB2, and delivers the data to a data bus DB2. For example, let receivers RV1 through RV8 correspond to an i-th address and let receivers RV9 through RV16 correspond to an (i+1)-th address. Then, when an address i is transmitted on the address bus AB2, data which enters through the receivers RV1 through RV8 are delivered to the data bus DB2. When an address (i+1) is transmitted on the address bus AB2, data which enter through the receivers RV9 through RV16 are delivered to the data bus DB2. This operation proceeds in the manner described to read the data. The data selector DSL2 stores the data on the data bus DB2 in eight of the latch circuits in accordance with an address received on the address bus AB2 from the address counter ADC. For example, let latch circuits R1 through L8 correspond to a j-th address and let latch circuits L9 through L16 correspond to a (j+1)-th address. Then, when an address j is transmitted on the address bus AB2, the data on the data bus DB2 are stored in the latch circuits L1 through L8. When an address (j+i) is transmitted on the address bus AB2, the data on the data bus DB2 are stored in the latch circuit L9 through L16.

Described next will be a successive transfer of data at first, second and subsequent addresses from the numerical control unit 11, with latch circuits L1 through L8 corresponding to the first address, latch circuits L9 through L16 corresponding to the second address, and so on.

First, prior to a direct memory access operation, described below, performed by the direct memory access controller 11g within the numerical control unit 11, the transmission control circuit TRCN of the numerical control unit 11 generates the synchronizing signal SYNC which is transmitted to the local control circuit 101 through a cable LN2. The synchronizing signal SYNC is applied to the address counter ADC and to the bit counter BTC to initially clear the contents thereof. Thereafter, the direct memory access controller 11g responds to a command from the processor 11c by starting a direct memory access operation for data transfer. When a transfer command for reading N-byte data from a prescribed address of the data memory 11a (Fig. 3) and for transferring the data is received from the processor 11c, the direct memory access controller 11g utilizes the idle time of the bus line to access the data memory 11a directly for reading the stored contents out of the memory from the prescribed address byte by byte in cyclic fashion and for applying the same to the interface circuit 11f. Further, when a write command for writing N-byte data successively into the data memory 11a from a prescribed address thereof is received from the processor, the direct memory access controller 11g uses the idle time of the bus line to read the data from the interface circuit 11f and access the data memory 11a directly for successively writing in the data from the prescribed address.

Thus, according to the direct memory access operation, the data stored in the data memory 11a

are read successively and written into the shift register SFR1 in parallel fashion through the gate circuit.

Next, the data are deliverd to a data cable LNo while being shifted bit by bit in response to the clock pulses CLK. In other words, parallel data are converted into serial data DATA transmitted as a bit serial. At this time, the clock pulses CLK also are delivered through a cable LN1 in order to indicate each bit position of the serial data DATA. Meanwhile, the local control circuit 101 samples the serial data DATA transmitted in response to the clock pulses CLK and performs a serial-parallel conversion (SP conversion) by writing the data into the shift register SFR2 in serial fashion while the data are shifted sequentially bit by bit. At the same time, the clock pulses CLK enter the bit counter BTC and are counted thereby. The bit counter BTC generates a carry pulse CP, thereby incrementing the address counter, when eight clock pulses have been counted, this being equivalent to the length (eight bits) of the data transmitted as the bit serial. The SP conversion of the serial data is ended by the incrementing of the address counter ADC. The data are written in parallel fashion from the shift register SFR2, through the data bus DB2 and into the latches L1 through L8, which correspond to the count 1 (first data address) of the address counter ADC, and are thence delivered to the various operator-manipulated devices through the corresponding drivers DV1 through DV8.

Thereafter, and in similar fashion, the contents of the address counter ADC are successively incremented so that the address counter generates a first address signal and second address signal for selecting the corresponding latch circuits. In Fig. 4, the address signals are generated within the local control circuit 101. It is permissible, however, to transmit the address signals from the numerical control unit 11 via the cable LNo. In such case the cables LN1, LN2 can be deleted.

In the foregoing, command data are sucessively transmitted from the numerical control unit 11 to each of the operator-manipulated devices, namely to the tape reader 13, tape puncher 14, MDI unit 16, operator's pendant 17 and manual pulse generator 18.

On the other hand, data are also applied to the interface circuit 11f from each of the operator-manipulated devices through the receivers RV1 through RVM, data selector DSL1, data bus DB2 and shift register SFR2. These data are subsequently stored in the data memory 11a by the direct memory access controller 11g.

In accordance with the present embodiment, connecting cables can be markedly reduced in a mechanical-electronics system even when the numerical control unit is remote from each of the operator-manipulated devices. This simplies the system arrangement and prevents the occurrence of misconnections. Further, since each of the operator-manipulated devices is controlled by the local control circuit, the numerical control unit need exchange data only with the power magnetics circuit or with the power magnetics circuit and local control circuit, thereby lightening the processing burden of the numerical control unit. Since the operator-manipulated devices may be collected together at a single location, the operator can perform his tasks with greater efficiency and remote control can be performed with facility.

## Claims

1. Numerical control apparatus, comprising a numerical control unit (11) controlling a machine tool, a data input unit (13), for example a paper tape reader, for entering numerical control machining program data, and operator-manipulated devices (16, 17, 18), including an operator's pendant, for operator control of the apparatus, the apparatus further comprising a local control circuit (101), remote from the numerical control unit (11), through which numerical control machining program data is passed from the data input unit (13) to the numerical control unit (11), and through which data is passed between the operator-manipulated devices (16, 17, 18) and the numerical control unit (11), all the data input/output units (13, 14, 16, 17, 18) being connected to the numerical control unit (11) via the local control circuit (101),
the numerical control unit (11) comprising a processor (11c), a data memory (11a) for storing numerical control machining program data and the results of processing, and a direct memory access controller (11g) operable in response to a data transfer command from the processor (11c) to start a direct memory access operation for data transfer between the thereby directly accessible data memory (11a) and the local control circuit (101) via a data transfer line ($LN_0$), through which the local control circuit (101) is connected to the numerical control unit (11), as a bit serial, and the local control circuit (101) comprising data selectors (DSL1, DSL2) for use in reading data from and transmitting data to the data input unit (13) and the operator-manipulated devices (16, 17, 18), the data selectors (DSL1, DSL2) being adapted to store the data in parallel form and transfer it to or from a selected one of the data input unit (13) and the operator-manipulated devices (16, 17, 18) in dependence upon an address fed to the data selectors, and a data conversion means (SFR2) for performing a serial-parallel data conversion upon data transferred to the data selectors (DSL1, DSL2) via the data transfer line ($LN_0$).

2. Apparatus as claimed in claim 1, wherein the operator-manipulated devices further include a manual data input (MDI) unit (16) and a manual pulse generator (15).

3. Apparatus as claimed in claim 1 or 2, wherein the local control circuit (101) is directly connected, by a data transfer line, to an interface circuit (11f) of the numerical control unit (11).

4. Apparatus as claimed in claim 1 or 2, wherein the local control circuit (101) is directly connected, by a data transfer line, to a power magnetics cabinet (15) of the apparatus, which is in turn connected to an interface circuit (11f) of the numerical control unit (11).

5. Apparatus as claimed in any preceding claim, wherein the numerical control unit (11) is unified with the said machine tool (19) controlled by the unit.

## Patentansprüche

1. Numerische Steuervorrichtung mit einer numerischen Steuereinheit (11), die eine Werkzeugmaschine steuert, einer Dateneingabeeinheit (13), beispielsweise ein Papierlochstreifenleser, zum Eingeben von Programmdaten für eine numerisch gesteuerte Bearbeitung sowie operatorbedienten Einrichtungen (16, 17, 18), die ein Operatorbedienungsteil für eine Operatorsteuerung der Vorrichtung enthalten,
—wobei die Vorrichtung ferner eine lokale Steuerschaltung (101) umfaßt, die örtlich entfernt von der numerischen Steuereinheit (11) aufgestellt ist, durch die Programmdaten für die numerisch gesteuerte Bearbeitung on der Dateneingabeeinheit (13) zu der numerischen Steuereinheit (11) übertragen werden und durch die die Daten zwischen den operatorbedienten Einrichtungen (16, 17, 18) und der numerischen Steuereinheit (11) übertragen werden, wobei alle Dateneingabe/-ausgabeeinheiten (13, 14, 16, 17, 18) mit der numerischen Steuereinheit (11) über die lokale Steuerschaltung (101) verbunden sind,
—wobei die numerische Steuereinheit (11) einen Prozessor (11c), einen Datenspeicher (11a) zum Speichern von Programmdaten für die numerisch gesteuerte Bearbeitung und der Ergebnisse von Verarbeitungen sowie eine Steuereinrichtung (11g) für einen Speicher mit wahlfreiem Zugriff umfaßt, die in Reaktion auf einen Datenübertragungsbefehl aus dem Prozessor (11c) betreibbar ist, um einen Betrieb des Speichers mit wahlfreiem Zugriff zur Datenübertragung in Form einer Bitserie zwischen dem dadurch mit direktem Zugriff ansteuerbaren Datenspeicher (11a) und der lokalen Steuerschaltung (101) über eine Datenübertragungsleitung ($LN_0$) zu starten, durch die die lokale Steuerschaltung (101) mit der numerischen Steuereinheit (11) verbunden ist, und
—wobei die lokale Steuerschaltung (101) umfaßt:
—Datenselektoren (DLS1, DLS2) zur Benutzung beim Lesen von Daten aus und beim Übertragen von Daten zu der Dateneingabeeinheit (13) und den operatorbedienten Einrichtungen (16, 17, 18), wobei die Datenselektoren (DLS1, DLS2) dazu bestimmt sind, die Daten in paralleler Form zu speichern und sie zu oder von einer ausgewählten der Dateneingabeeinheit (13) und der operatorbedienten Einrichtungen (16, 17, 18) in Abhängigkeit von einer Adresse zu übertragen, die den Datenselektoren eingegeben ist, und
—ein Datenumsetzmittel (SFR2) zum Ausführen einer Seriell/Parallel-Datenumsetzung aufgrund von Daten, die zu den Datenselektroden (DSL1, DSL2) über die Datenübertragungsleitung (LN$_0$) übertragen sind.

2. Vorrichtung nach Anspruch 1, bei der die operatorbedienten Einrichtungen ferner eine Manuelldateneingabe (MDI)-Einheit (16) und einen Manuellimpulserzeuger (15) enthalten.

3. Vorrichtung nach Anspruch 1 oder 2, bei der die lokale Steuerschaltung (101) direkt durch eine Datenübertragungsleitung mit einer Schnittstellenschaltung (11f) der numerischen Steuereinheit (11) verbunden ist.

4. Vorrichtung nach Anspruch 1 oder 2, bei der die lokale Steuerschaltung (101) direkt durch eine Datenübertragungsleitung mit einem Kraftmagnetgehäuse (15) der Vorrichtung verbunden ist, das seinerseits mit einer Schnittstellenschaltung (11f) der numerischen Steuereinheit (11) verbunden ist.

5. Vorrichtung nach einem der vorhergehenden Ansprüche, bei der die numerische Steuereinheit (11) mit der Werkzeugmaschine (19) vereint ist, die durch die Steuereinheit gesteuert wird.

**Revendications**

1. Dispositif de commande numérique, comprenant une unité de commande numérique (11) commandant une machine-outil, une unité d'entrée de données (13), par exemple un lecteur de bande de papier, servant à entrer des données de programme d'usinage à commande numérique, et des dispositifs commandés par opérateur (16, 17, 18), comprenant un tableau suspendu d'opérateur, pour la commande par opérateur du dispositif,

le dispositif comprenant en outre un circuit de commande locale (101), éloigné de l'unité de commande numérique (11), par l'intermédiaire duquel la donnée de programme d'usinage à commande numérique est envoyée depuis l'unité d'entrée de données (13) à l'unité de commande numérique (11), et par l'intermédiaire duquel la donnée est envoyée entre les dispositifs commandés par opérateur (16, 17, 18) et l'unité de commande numérique (11), toutes les unités d'entrées/sorties de données (13, 14, 16, 17, 18) étant reliées à l'unité de commande numérique (11) par le circuit de commande locale (101),

l'unité de commande numérique (11) comprenant un processeur (11c), une mémoire de données (11a) servant à mémoriser les données de programme d'usinage à commande numérique et les résultats de traitement, et un contrôleur d'accès direct à la mémoire 11g mis en oeuvre en réponse à une commande de transfert de données provenant du microprocesseur (11c) pour lancer une opération d'accès direct à la mémoire pour un transfert de données entre la mémoire de données rendue ainsi directement accessible (11a) et le circuit de commande locale (101) par une ligne de transfert de données (LN$_0$), par l'intermédiaire de laquelle le circuit de commande locale (101) est relié à l'unité de commande numérique (11) sous la forme d'une série de bits, et le circuit de commande locale (101) comportant des sélecteurs de données (DSL1, DSL2) servant à être utilisés pour la lecture de données provenant de l'unité d'entrée de données (13) et pour l'émission de données à partir de celle-ci, ainsi que des dispositifs commandés par opérateur (16, 17, 18), les sélecteurs de données (DSL1, DSL2) étant prévus pour mémoriser la donnée sous forme parallèle et transférer celle-ci à une unité sélectionnée ou à partir de celle-ci de l'unité d'entrée de données (13) ainsi que des dispositifs commandés par opérateur (16, 17, 18) en fonction d'une addresse envoyée aux sélecteurs de données, et un moyen de conversion de données (SFR2) servant à exécuter une conversion de données série-parallèle sur la donnée transférée aux sélecteurs de données (DSL1, DSL2) par la ligne de transfert de données (LN$_0$).

2. Dispositif comme revendiqué à la revendication 1, dans lequel les dispositifs commandés par opérateur comprennent en outre une unité d'entrée de données manuelle (MDI (16)) et un générateur d'impulsions manuel (15).

3. Dispositif comme revendiqué dans la revendication 1 ou 2, dans lequel le circuit de commande locale (101) est directement relié, par une ligne de transfert de données, à un circuit d'interface (11f) de l'unité de commande numérique (11).

4. Dispositif comme revendiqué dans la revendication 1 ou 2, dans lequel le circuit de commande locale (101) est directement relié par une ligne de transfert de données à un coffret magnétique de puissance (15) du dispositif, lequel est à son tour relié à un circuit d'interface (11f) de l'unité de commander numérique (11).

5. Dispositif comme revendiqué dans l'une quelconque des revendications précédentes, dans lequel l'unité de commande numérique (11) est associée à ladite machine-outil (19) commandée par l'unité.

# Fig. 1

Processor — 11c

11b

Data
Memory — 11a

ROM

11d    11e

Pulse
Distri-
butor

Servo
Circuit

11

12

19

13a    13

Tape
Reader

Tape
Puncher

14

MDI — 16

Operator's
Pendant — 17

Manual
Pulse
Generator — 18

Data
Input/Output
Circuit

Numerical Control Unit

15

# Fig. 2

Processor — 11c

11b

Data Memory — 11a

ROM

11d    11e

Pulse Distributor    Servo Circuit

11

12

13a

13

Tape Reader

Tape Puncher

14

18

Manual Pulse Generator

17    16

Operator's Pendant    MDI

Data Input/Output Circuit

Numerical Control Unit

15

19

# Fig. 3

# Fig. 4

EP 0 088 804 B1